(19) 

Europäisches
Patentamt
European
Patent Office
Office européen
des brevets

(11) **EP 4 549 898 A1**

(12) **EUROPEAN PATENT APPLICATION**
published in accordance with Art. 153(4) EPC

(43) Date of publication:
**07.05.2025 Bulletin 2025/19**

(21) Application number: **23830103.0**

(22) Date of filing: **21.06.2023**

(51) International Patent Classification (IPC):
**G01K 7/22** (2006.01)

(52) Cooperative Patent Classification (CPC):
**G01K 7/22; G01K 7/25**

(86) International application number:
**PCT/CN2023/101903**

(87) International publication number:
**WO 2024/001924 (04.01.2024 Gazette 2024/01)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.06.2022 CN 202210764620**

(71) Applicant: **Sanechips Technology Co., Ltd.
Shenzhen, Guangdong 518055 (CN)**

(72) Inventors:
- **SUN, Niuyi
  Shenzhen, Guangdong 518055 (CN)**
- **YANG, Dan
  Shenzhen, Guangdong 518055 (CN)**
- **MEI, Na
  Shenzhen, Guangdong 518055 (CN)**
- **SUN, Tuobei
  Shenzhen, Guangdong 518055 (CN)**

(74) Representative: **Cristinelli, Luca et al
Jacobacci & Partners S.p.A.
Corso Emilia, 8
10152 Torino (IT)**

(54) **TEMPERATURE SENSOR, TEMPERATURE SENSOR PACKAGING METHOD, AND TEMPERATURE MEASUREMENT METHOD**

(57) A temperature sensor comprises: a first thermistor (101), a second thermistor (102) in parallel connection with the first thermistor (101), a first diode (103) in serial connection with the first thermistor (101), and a second diode (104) in serial connection with the second thermistor (102), wherein the first thermistor (101) and the second thermistor (102) are two adjacent thermistors made of the same material and process but having different geometric dimensions, and the first diode (103) and the second diode (104) are two adjacent diodes of the same model but opposite polarities. Further disclosed are a temperature sensor packaging method and a temperature measurement method.

**Fig. 2**

**EP 4 549 898 A1**

**Description**

**Cross-Reference to Related Application**

This application is based on and claims priority to Chinese Patent Application CN202210764620.7 filed on June 30, 2022 and entitled "Temperature Sensor, Temperature Sensor Packaging Method, and Temperature Measurement Method", the disclosure of which is incorporated herein by reference in its entirety.

**Technical Field**

Embodiments of the present disclosure relate to the field of electronic circuit technologies, and in particular, to a temperature sensor, a temperature sensor packaging method, and a temperature measurement method.

**Background**

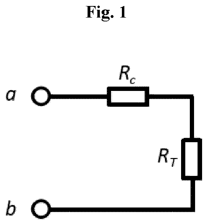

Micronano scale precise calorimetry has always been a technology field of great interest in the chip and semiconductor industry. A temperature sensor designed using the temperature characteristics of resistance, which predict local temperature rise by monitoring the resistance change of a thermistor, is a simple and practical calorimetry solution with good linearity. However, such resistance-based temperature sensor still needs to be externally interconnected with other components, power supply, and test equipment, which inevitably introduce parasitic effects outside the sensor when measuring the thermistor. As shown in Fig. 1, the above situation can be abstracted into a pure resistance network with two ports, where $R_c$ is the lumped parasitic resistance, and $R_T$ is the thermistor of the sensor. Therefore, when measuring from the two ports of this resistance network, the actual resistance is $R_c + R_T$, not the true $R_T$. Moreover, the positions, the materials used (i.e., different temperature coefficients and low-temperature resistivities), the sizes, and the local temperatures of $R_c$ and $R_T$ in the system may all differ, making the parasitic problem a huge challenge for inferring a local temperature in the system based on the resistance measurement on the thermistor $R_T$.

**Summary**

Embodiments of the present disclosure provide a temperature sensor, a temperature sensor packaging method, and a temperature measurement method, which may at least solve a parasitic problem in a technical solution of inferring a local temperature in a system based on resistance measurement on a thermistor $R_T$.

According to an embodiment of the present disclosure, provided is a temperature sensor, including: a first thermistor, a second thermistor connected in parallel to the first thermistor, a first diode connected in series to the first thermistor, and a second diode connected in series to the second thermistor, wherein the first thermistor and the second thermistor are two adjacent thermistors with a same material and process, but different geometric dimensions, and the first diode and the second diode are two adjacent diodes with a same type, but opposite polarities.

According to another embodiment of the present disclosure, provided is a temperature sensor packaging method, which is applied to the described temperature sensor, including: forming the first thermistor, the second thermistor, the first diode and the second diode on a silicon wafer chip by a diffusion process, and interconnecting the first thermistor, the second thermistor, the first diode and the second diode by metal on the silicon wafer chip to form the temperature sensor on the silicon wafer chip.

According to still another embodiment of the present disclosure, provided is a temperature sensor packaging method, which is applied to the described temperature sensor, including: burying the first thermistor, the second thermistor, the first diode, and the second diode into a buried layer of a substrate by embedding, or arranging the first thermistor, the second thermistor, the first diode, and the second diode on the substrate by surface mounting, wherein the first thermistor, the second thermistor, the first diode, and the second diode are discrete components.

According to yet another embodiment of the present disclosure, provided is a temperature sensor packaging method, which is applied to the described temperature sensor, including: respectively arranging a plurality of temperature sensors in different system layers of a stacked packaging structure, wherein the temperature sensors are at a wafer level or a substrate level; and uniformly leading ports of the temperature sensors out to a highest-layer packaging port through internal interconnection, so as to perform a parallel test among multiple layers.

According to yet another embodiment of the present disclosure, provided is a temperature measurement method, including: changing a polarity of a voltage between two ports of the temperature sensor, and measuring a resistance of the temperature sensor before the change of the polarity of the voltage and a resistance of the temperature sensor after the change of the polarity of the voltage; and obtaining a difference $\Delta R$ between the first thermistor and the second thermistor in the temperature sensor according to the resistance of the temperature sensor before the change of the polarity of the voltage and the resistance of the temperature sensor after the change of the polarity of the voltage, and obtaining a temperature T detected by the temperature sensor based on a following formula:

$$\Delta R = \rho_0 * \left( \frac{L_1}{S_1} - \frac{L_2}{S_2} \right) * (1 + \alpha T)$$

where $\rho_0$ is a low-temperature resistivity of the first thermistor or the second thermistor, $\alpha$ is a temperature coefficient of the first thermistor or the second thermistor, $L_1$ is a length of the first thermistor, $L_2$ is a length of the second thermistor, $S_1$ is a cross-sectional area of the first thermistor, and $S_2$ is a cross-sectional area of the second thermistor.

## Brief Description of the Drawings

Fig. 1 is a schematic diagram of an abstracted pure resistance network with two ports in the related art;
Fig. 2 is a schematic diagram of a temperature sensor according to an embodiment of the present disclosure;
Fig. 3 is a flowchart of a temperature sensor packaging method according to an embodiment of the present disclosure;
Fig. 4 is a flowchart of a temperature sensor packaging method according to another embodiment of the present disclosure;
Fig. 5 is a flowchart of a temperature sensor packaging method according to yet another embodiment of the present disclosure;
Fig. 6 is a flowchart of a temperature measurement method according to an embodiment of the present disclosure;
Fig. 7 is a schematic diagram of a diode characteristic and an equivalent circuit in the related art;
Fig. 8 is a schematic diagram of a core circuit of a temperature sensor according to an embodiment of the present disclosure;
Fig. 9 is a schematic diagram of a temperature measurement and check process of a temperature sensor according to an embodiment of the present disclosure;
Fig. 10 is a schematic diagram of a wafer-level application of a temperature sensor according to an embodiment of the present disclosure;
Fig. 11 is a schematic diagram of a substrate-level application of a temperature sensor according to an embodiment of the present disclosure; and
Fig. 12 is a schematic diagram of an application of the temperature sensor according to an embodiment of the present disclosure on an advanced packaging structure.

## Detailed Description of the Embodiments

Embodiments of the present disclosure will be described below in detail with reference to the accompanying drawings and in conjunction with embodiments.

It should be noted that, terms such as "first" and "second" in the description, claims, and accompanying drawings of the present disclosure are used to distinguish similar objects, but are not necessarily used to describe a specific sequence or order.

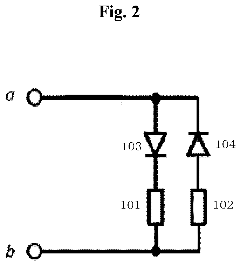

The embodiments of the present disclosure provide a temperature sensor design based on the resistance temperature effect and immune to interconnect parasitics. Fig. 2 is a schematic diagram of a temperature sensor according to an embodiment of the present disclosure. As shown in Fig. 2, the temperature sensor includes: a first thermistor (101), a second thermistor (102) connected in parallel to the first thermistor (101), a first diode (103) connected in series to the first thermistor (101), and a second diode (104) connected in series to the second thermistor (102), wherein the first thermistor (101) and the second thermistor (102) are two adjacent thermistors with a same material and process, but different geometric dimensions, and the first diode (103) and the second diode (104) are two adjacent diodes with a same type, but opposite polarities.

In an exemplary embodiment, in a case where a detection position is on a metal interconnect layer on a silicon wafer chip, the first thermistor (101) and the second thermistor (102) are formed by metal interconnects of the metal interconnect layer.

In an exemplary embodiment, the first thermistor (101) and the second thermistor (102) are polysilicon resistors.

In an exemplary embodiment, the first diode (103) and the second diode (104) are discrete devices or integrated devices.

In an exemplary embodiment, spacing between the first thermistor (101) and the second thermistor (102) and spacing between the first diode (103) and the second diode (104) are determined by a manufacturing process employed. For example, in this embodiment, an optimum spacing between the first thermistor (101) and the second thermistor (102) and an optimum spacing between the first diode (103) and the second diode (104) are a minimum spacing allowed by rules of the manufacturing process employed.

By means of the described embodiments, by utilizing the unidirectional conduction characteristics of diodes, a new type of resistance-based temperature sensor based on a diode/resistance hybrid circuit is constructed, so that by changing a polarity of a voltage between ports of the new type of resistance-based temperature sensor, the elimination of parasitic resistance parts of the circuit is realized. Therefore, the parasitic problem in the technical solution of inferring the local temperature in the system based on the resistance measurement on the thermistor $R_T$ can be solved, thereby improving the accuracy of temperature measure for a detection position.

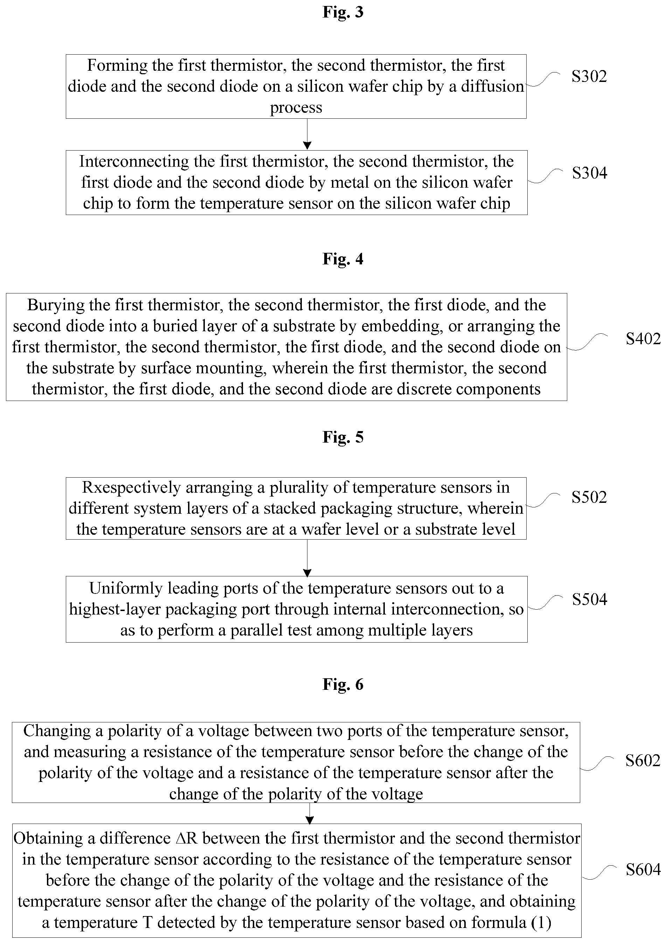

An embodiment of the present disclosure further provides a temperature sensor packaging method, which is applied to one or more embodiments described above. Fig. 3 is a flowchart of a temperature sensor packaging method according to an embodiment of the present disclosure. As shown in Fig. 3, the method includes the following operations S302 and S304.

In operation S302, the first thermistor, the second thermistor, the first diode and the second diode are formed on a silicon wafer chip by a diffusion process.

In operation S304, the first thermistor, the second thermistor, the first diode and the second diode are interconnected by metal on the silicon wafer chip to form the temperature sensor on the silicon wafer chip.

In an exemplary embodiment, the temperature sensor packaging method may further include: in a case where the first thermistor and the second thermistor are polysilicon resistors, the temperature sensor is led out from the silicon wafer chip through vias and a metal interconnect layer on the silicon wafer chip.

In an exemplary embodiment, the temperature sensor packaging method may further include an operation of plating the first thermistor and the second thermistor onto the silicon wafer chip.

Fig. 4 is a flowchart of a temperature sensor packaging method according to another embodiment of the present disclosure. As shown in Fig. 4, the method includes the following operation S402.

In operation S402, the first thermistor, the second thermistor, the first diode, and the second diode are buried into a buried layer of a substrate by embedding, or the first thermistor, the second thermistor, the first diode, and the second diode are arranged on the substrate by surface mounting, wherein the first thermistor, the second thermistor, the first diode, and the second diode are discrete components.

In an exemplary embodiment, the first thermistor and the second thermistor are formed by metal interconnects of a detection layer of the substrate.

Fig. 5 is a flowchart of a temperature sensor packaging method according to yet another embodiment of the present disclosure. As shown in Fig. 5, the method includes the following operations S502 and S504.

In operation S502, a plurality of temperature sensors are respectively arranged in different system layers of a stacked packaging structure, wherein the temperature sensors are at a wafer level or a substrate level.

In operation S504, ports of the temperature sensors are uniformly led out to a highest-layer packaging port through internal interconnection, so as to perform a parallel test among multiple layers.

In an exemplary embodiment, the ports of the temperature sensors are uniformly led out to the highest-layer packaging port through the internal interconnection in a following manner: connecting the ports of the temperature sensors through internal interconnection and then leading out the ports through a bump layer, an interposer layer, an Integrated Circuit (IC) substrate, and a Ball Grid Array (BGA) ball layer of the stacked packaging structure; or leading out the temperature sensors through respective independent interconnection paths to a topmost output layer of the stacked packaging structure.

An embodiment of the present disclosure further provides a temperature measurement method applied to the temperature sensor in any one of the above embodiments. Fig. 6 is a flowchart of a temperature measurement method according to an embodiment of the present disclosure. As shown in Fig. 6, the flow includes the following operations S602 and S604.

In operation S602, a polarity of a voltage between two ports of the temperature sensor is changed, and a resistance of the temperature sensor before the change of the polarity of the voltage and a resistance of the temperature sensor after the change of the polarity of the voltage are measured.

In operation S604, a difference $\Delta R$ between the first thermistor and the second thermistor in the temperature sensor is obtained according to the resistance of the temperature sensor before the change of the polarity of the voltage and the resistance of the temperature sensor after the change of the polarity of the voltage, and a temperature T detected by the temperature sensor is obtained based on the following Formula (1):

$$\Delta R = \rho_0 * \left( \frac{L_1}{S_1} - \frac{L_2}{S_2} \right) * (1 + \alpha T) \qquad \text{Formula (1)}$$

where $\rho_0$ is a low-temperature resistivity of the first thermistor or the second thermistor, $\alpha$ is a temperature coefficient of the first thermistor or the second thermistor, $L_1$ is a length of the first thermistor, $L_2$ is a length of the second thermistor, $S_1$ is a cross-sectional area of the first thermistor, and $S_2$ is a cross-sectional area of the second thermistor.

In an exemplary embodiment, the temperature measurement method may further include: setting a plurality of different ambient temperatures at which the temperature sensor is located; and respectively determining a plurality of differences between the first thermistor and the second thermistor in the plurality of different ambient temperatures by changing the polarity of the voltage between the two ports of the temperature sensor, and performing, based on a linear regression relationship between the plurality of differences and the plurality of different ambient temperatures, a check on a parameter of at least one of: $\rho_0$, $\alpha$, $L_1$, $L_2$, $S_1$ and $S_2$.

To facilitate understanding of the technical solutions provided by the embodiments of the present disclosure, the technical solutions are described below in detail with reference to embodiments of specific scenarios.

The embodiments of the present disclosure provide a temperature sensor design based on a resistance temperature effect and immune to interconnect parasitics, and provides related circuit analysis, testing principles, and procedures for this temperature sensor, as well as its applications in various electronic systems.

According to an embodiment, the parasitic immune temperature sensor circuit design utilizes the unidirectional conduction characteristics of diodes to construct a new type of resistance-based temperature sensor based on a diode/resistor hybrid circuit. During the temperature measurement process, by changing a polarity of a voltage between ports of the new type of resistance-based temperature sensor, the change in the resistance difference ΔR between the two thermistors that are adjacent in position, homogeneous but with different geometric dimensions, is obtained, thus enabling the deduction of the parasitic resistance part of the circuit, and consequently, precise temperature detection at the detection position. The adjacent position ensures that the local temperatures of the two thermistors are as close to each other as possible, the homogeneity ensures that the resistivity and temperature coefficients of the two thermistors are the same, and different geometric dimensions ensure that resistance values of the two thermistors are different.

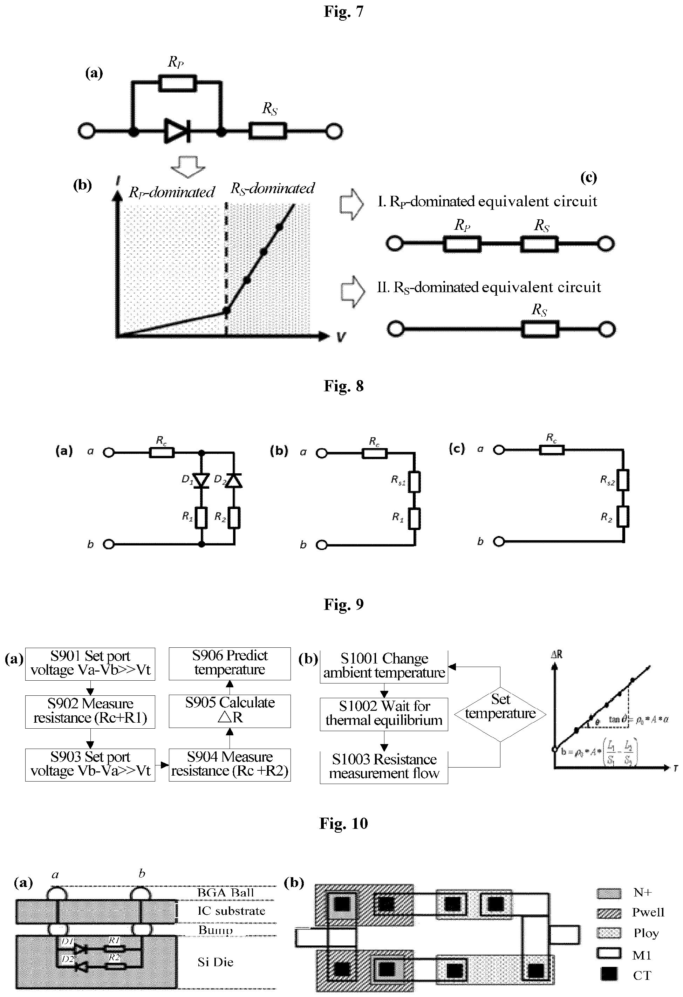

Fig. 7 is a schematic diagram of a diode characteristic and an equivalent circuit in the related art. As shown in Fig. 7(a), Rs and Rp represent the series and parallel resistances of the diode, respectively. Generally, Rs is much smaller than Rp. When the external voltage V is less than a turn-on voltage Vt of the ideal diode in Fig. 7(a), the ideal diode is open-circuited, the IV characteristic corresponds to the Rp-dominated region in Fig. 7(b), and the equivalent circuit, as shown in Fig. 7(c) I, can be approximated as a series connection of Rs and Rp. Due to the high resistance value of the parallel resistance, the current flowing through the diode is very small, so the IV characteristic of the Rp-dominated region is generally presented as current cutoff. When the external voltage V is greater than the turn-on voltage Vt of the diode, the ideal diode in Fig. 7(a) is short-circuited, thereby bypassing Rp. In this case, the IV characteristic is shown in the Rs-dominated region in Fig. 7(b), and presented as the resistance of an Rs resistor, as shown in Fig. 7(c) II, which can be approximated as a pure resistor circuit with an extremely small resistance value.

Fig. 8 is a schematic diagram of a core circuit of a temperature sensor according to an embodiment of the present disclosure. As shown in Fig. 8(a), the temperature sensor is composed of two thermistors R1 and R2 and two diodes D1 and D2 in series and parallel connection. Here, Rc represents a lumped parasitic resistance of other interconnections and components outside the sensor. D1 and D2 are two diodes with opposite polarities and adjacent positions, which should be as consistent as possible in terms of material, manufacturing process, and geometric size. R1 and R2 are two adjacent thermistors with the same material and process (i.e., the same $\rho_0$ and $\alpha$), but with different geometric sizes, where R1 is assumed to be greater than R2 for the sake of description.

Based on the IV relationship and unidirectional conductivity of diodes, it can be known that changing the polarity of the voltage between the ports a and b can achieve differentiation of different resistive components in the circuit, thereby eliminating the influence of the parasitic effect Rc. For example, as shown in Fig. 8, when Va-Vb>>Vt, D1 is conducted and D2 is cut off, the equivalent circuit is as shown in Fig. 8(b), and the total resistance of the network measured from the ports a and b is Rs1+R1+Rc; and when Vb-Va>>Vt, D2 is conducted and D1 is cut off, the equivalent circuit is as shown in Fig. 8(c), and the total resistance of the network measured from the ports a and b is Rs2+R2+Rc. Since D1 and D2 are two diodes with the same type (i.e., consistent in material, process, and size) and adjacent in position, it is known that Rs1=Rs2, so the difference Δ R between R1 and R2 can be obtained through the following Formula (2):

$$\Delta R = (R_{s1} + R_1 + R_c) - (R_{s2} + R_2 + R_c) = R_1 - R_2 \qquad \text{Formula (2)}$$

From Formula (2), it can be seen that by changing the polarity of the voltage between the ports, the difference between the equivalent resistances before and after the change can eliminate the parasitic part Rc in the circuit, and ΔR is only related to R1 and R2. Due to the aforementioned assumption of R1 and R2 being adjacent and homogeneous, it is easy to establish the relationship between the resistance difference ΔR between the two thermistors and the temperature T based on the temperature characteristics of the resistance (i.e., Formula (3)).

$$R = \rho_0 * \left(\frac{L}{S}\right) * (1 + \alpha T) \qquad \text{Formula (3)}$$

Specifically, the mathematical relationship between the resistance difference ΔR and the temperature T is derived as follows.

Based on the aforementioned assumption that R1 and R2 are adjacent and homogeneous, combined with Formula (3), the relationship between R1 and R2 and the temperature can be expressed as the following Formulas (4) and (5), where L1, L2, S1, and S2 are the lengths and the cross-sectional areas of the thermistors R1 and R2, respectively:

$$R_1 = \rho_0 * \left(\frac{L_1}{S_1}\right) * (1 + \alpha T) \qquad \text{Formula (4)}$$

$$R_2 = \rho_0 * \left(\frac{L_2}{S_2}\right) * (1 + \alpha T) \qquad \text{Formula (5)}$$

Formulas (4) and (5) are substituted into Formula (2) to obtain the following Formula (6):

$$\Delta R = \rho_0 * \left(\frac{L_1}{S_1} - \frac{L_2}{S_2}\right) * (1 + \alpha T) = \rho_0 * A * (1 + \alpha T) \qquad \text{Formula (6)}$$

It can be seen that the resistance difference and the temperature still satisfy a linear relationship similar to Formula (3), where A is a structural factor related to the size of the thermistor, and defined as

$$A = \left(\frac{L_1}{S_1} - \frac{L_2}{S_2}\right).$$

In this embodiment, the test principle of the parasitic immune temperature sensor includes: using the aforementioned parasitic immune temperature sensor and Formula (6) to provide the following test process.

(1) Under the premise of knowing the dimensions and temperature coefficients of the two thermistors, the process for measuring the resistance difference ΔR and predicting the temperature is described as follows.

The process for obtaining the thermistor difference ΔR through two resistance measurements by changing the polarity of the voltage between the ports is shown in Fig. 9(a), including the following operations S901 to S906.

In operation S901, the port voltage is set as Va-Vb>>Vt, so that D1 is conducted and D2 is cut off.

In operation S902, the port resistance is measured to obtain Rs1+R1+Rc.

In operation S903, the port voltage is set as Vb-Va>>Vt, so that D2 is conducted and D1 is cut off.

In operation S904, the port resistance is measured to obtain Rs2+R2+Rc.

In operation S905, ΔR is calculated.

In operation S906, Formula (6) is used to predict the local temperature T.

(2) When the dimensions and temperature coefficients of the thermistors are unknown, parameter checking can also be performed through linear fitting of the actual measured data of the resistance difference ΔR and the temperature T.

The calibration process for resistance difference and temperature under the premise of unknown important parameters is shown in Fig. 9(b), including the following operations S1001 to S1003.

In operation S1001, a new environmental temperature is set to Ti.

In operation S1002, wait for the system to reach thermal equilibrium.

In operation S1003, Δ Ri is obtained according to the process of operations S901~S905.

Switch to the next temperature Ti+1, and repeat operations S1001~S1003.

After the above operations, a linear relationship between the resistance difference ΔR and the temperature T as shown in Fig. 9(b) can be obtained. In this way, when the dimensions and temperature coefficients of the thermistors are unknown, parameter checking can be performed through this linear relationship.

In the embodiment of the present disclosure, the parasitic immune temperature sensor can be applied to a wafer-level packaging structure, a substrate-level packaging structure, and an advanced packaging structure.

Fig. 10 is a schematic diagram of a wafer-level application of a temperature sensor according to an embodiment of the present disclosure. As shown in Fig. 10(a), in the wafer-level application of this temperature sensor, the required symmetric diodes D1 and D2 and asymmetric thermistors R1 and R2 may be directly formed on the Si die (bare chip) through diffusion processes, and then led out through the metal interconnections on the Si Die. When the detection position is on the metal interconnections of the Si Die, R1 and R2 are constituted by the metal interconnection lines of the corresponding detection layer. The layout placement of the thermistors R1 and R2, and the diodes D1 and D2, between like and unlike devices adopts the smallest spacing allowed by the process rules to improve the detection accuracy of the sensor. Fig. 10(b) is a layout schematic of the required diodes and thermistors construction using the front-end processes in wafer manufacturing.

In this embodiment, the NP junctions of the diodes are realized through N+ and Pwell diffusion layers, respectively, and the thermistors are composed of two polycrystalline silicon (Poly) resistors of different lengths, which are finally connected out through via Through-Hole Vias (CT) and metal interconnect layers (M1). Since the thermistors are chosen as Poly, the thermistors are generally used for testing the junction temperature of the Si Die or the temperature of the adjacent lower metal interconnection layers. The above solution implemented with wafer processes can achieve miniaturization of the embedded sensor and cost reduction. If mass production testing is required, as shown in Fig. 10(a) with the FCBGA packaging form as an example, the signal can be led out through the bump layer connecting the Si Die with the packaging substrate, the IC substrate, and the BGA ball.

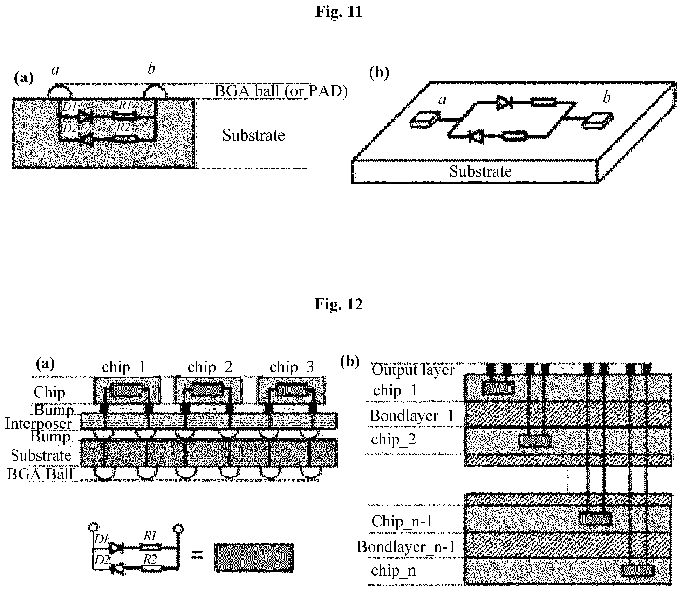

Fig. 11 is a schematic diagram of a substrate-level application of a temperature sensor according to an embodiment of the present disclosure. The applicable substrate types include, but are not limited to, common IC substrates and PCBs. Figs/ 11(a) and 11(b) are implementation schematic diagrams of the substrate buried layer, which can be applied to temperature monitoring of any inner layer of the substrate. Fig. 11(b) is an implementation schematic diagram for surface temperature detection on the substrate.

In this embodiment, symmetric diodes D1 and D2 can be chosen as discrete devices; thermistors R1 and R2 can be chosen as discrete devices for embedding or surface mounting, or can be directly constructed using the metal interconnects of the required detection layer. The layout design requirements are similar to the aforementioned wafer-level embodiment, with the spacing between like devices and unlike devices being minimized.

Fig. 12 is a schematic diagram of an application of the temperature sensor according to an embodiment of the present disclosure on an advanced packaging structure. Figs. 12(a) and 12(b) are implementation schematic diagrams for 2.5D packaging structure and 3D stacked packaging structure, respectively. The sensor position can be configured at different system layers and physical layers according to actual needs, and the sensor can be at the wafer level or the substrate level. To achieve parallel testing between multiple layers in 2.5D and 3D packaging structures, as shown in Fig. 12, the ports of the sensors at different positions can be uniformly led out to the highest-layer packaging interface for measurement through internal interconnects. For example, in the CoWoS in Fig. 12(a), the sensors on respective packaged chips are led out through the bump, the interposer (silicon interposer), the IC substrate, and finally through the BGA balls. In Fig. 12(b), the stacked chips in the 3D packaging can be led out to the topmost output layer through their independent interconnection paths.

In this embodiment, due to the parasitic effect immunity characteristic of the temperature sensor, the temperature detection accuracy of the sensor is independent of the interconnection wiring length, layout design, and local temperature of other layers outside the sensor. Therefore, it is possible to effectively compare the distribution of hot spots in complex packaging structures through multi-point monitoring with the temperature sensor. The specific requirements for the layout design of the sensor in advanced packaging structures are similar to those at the wafer level and substrate level.

The temperature sensor disclosed in the above embodiments can be applied to multiple fields such as analog integrated circuit design, wafer and packaging thermal design, and reliability engineering, and provide strong measurement support for thermal design and temperature detection in different systems (such as automotive-grade (such as automotive chips) and industrial-grade system products).

Obviously, those having ordinary skill in the art should understand that each module or each operation of the above embodiments of the present disclosure can be implemented by a universal computing device, they may be centralized on a single computing device or distributed on a network composed of a plurality of computing devices, they can be implemented by program codes executable by a computing apparatus, and thus can be stored in a storage apparatus and executed by the computing apparatus. Furthermore, in some cases, the shown or described operations may be executed in an order different from that described here, or they are made into integrated circuit modules respectively, or a plurality of modules or operations therein are made into a single integrated circuit module for implementation. As such, the present disclosure is not limited to any particular hardware and software combination.

The foregoing descriptions are merely exemplary embodiments of the present disclosure, but are not intended to limit the present disclosure, for those having ordinary skill in the art, the present disclosure may have various modifications and variations. Any modifications, equivalent replacements, improvements and the like made within the principle of the present disclosure shall fall within the scope of protection of the present disclosure.

**Claims**

1. A temperature sensor, comprising: a first thermistor (101), a second thermistor (102) connected in parallel to the first thermistor (101), a first diode (103) connected in series to the first thermistor (101), and a second diode (104) connected in series to the second thermistor (102), wherein the first thermistor (101) and the second thermistor (102) are two adjacent thermistors with a same material and process, but different geometric dimensions, and the first diode (103) and the second diode (104) are two adjacent diodes with a same type, but opposite polarities.

2. The temperature sensor according to claim 1, wherein in a case where a detection position is on a metal interconnect layer on a silicon wafer chip, the first thermistor (101) and the second thermistor (102) are formed by metal interconnects of the metal interconnect layer.

3. The temperature sensor according to claim 1, wherein the first thermistor (101) and the second thermistor (102) are polysilicon resistors.

4. The temperature sensor according to claim 1, wherein the first diode (103) and the second diode (104) are discrete devices or integrated devices.

5. The temperature sensor according to claim 1, wherein spacing between the first thermistor (101) and the second thermistor (102) and spacing between the first diode (103) and the second diode (104) are determined by a manufacturing process employed.

6. A temperature sensor packaging method applied to the temperature sensor according to any one of claims 1-3 and 5, the temperature sensor packaging method comprising:
   forming the first thermistor, the second thermistor, the first diode and the second diode on a silicon wafer chip by a diffusion process, and interconnecting the first thermistor, the second thermistor, the first diode and the second diode by metal on the silicon wafer chip to form the temperature sensor on the silicon wafer chip.

7. The temperature sensor packaging method according to claim 6, further comprising,
   in a case where the first thermistor and the second thermistor are polysilicon resistors, leading out the temperature sensor from the silicon wafer chip through vias and a metal interconnect layer on the silicon wafer chip.

8. The temperature sensor packaging method according to claim 7, further comprising:
   plating the first thermistor and the second thermistor onto the silicon wafer chip.

9. A temperature sensor packaging method applied to the temperature sensor according to claim 1 or 4 or 5, the temperature sensor packaging method comprising:
   burying the first thermistor, the second thermistor, the first diode, and the second diode into a buried layer of a substrate by embedding, or arranging the first thermistor, the second thermistor, the first diode, and the second diode on the substrate by surface mounting, wherein the first thermistor, the second thermistor, the first diode, and the second diode are discrete components.

10. The temperature sensor packaging method according to claim 9, wherein the first thermistor and the second thermistor are formed by metal interconnects of a detection layer of the substrate.

11. A temperature sensor packaging method applied to the temperature sensor according to any one of claims 1-5, the temperature sensor packaging method comprising:

    respectively arranging a plurality of temperature sensors in different system layers of a stacked packaging structure, wherein the temperature sensors are at a wafer level or a substrate level; and
    uniformly leading ports of the temperature sensors out to a highest-layer packaging port through internal interconnection, so as to perform a parallel test among multiple layers.

12. The temperature sensor packaging method according to claim 11, wherein the uniformly leading ports of the temperature sensors out to a highest-layer packaging port through internal interconnection comprises:
    connecting the ports of the temperature sensors through internal interconnection and then leading out the ports through a bump layer, an interposer layer, an Integrated Circuit, IC, substrate, and a Ball Grid Array, BGA, ball layer of the stacked packaging structure; or leading out the temperature sensors through respective independent interconnection paths to a topmost output layer of the stacked packaging structure.

13. A temperature measurement method applied to the temperature sensor according to any one of claims 1 to 5, the temperature measurement method comprising:

changing a polarity of a voltage between two ports of the temperature sensor, and measuring a resistance of the temperature sensor before the change of the polarity of the voltage and a resistance of the temperature sensor after the change of the polarity of the voltage; and

obtaining a difference ∆R between the first thermistor and the second thermistor in the temperature sensor according to the resistance of the temperature sensor before the change of the polarity of the voltage and the resistance of the temperature sensor after the change of the polarity of the voltage, and obtaining a temperature T detected by the temperature sensor based on a following formula:

$$\Delta R = \rho_0 * \left( \frac{L_1}{S_1} - \frac{L_2}{S_2} \right) * (1 + \alpha T)$$

where $\rho_0$ is a low-temperature resistivity of the first thermistor or the second thermistor, $\alpha$ is a temperature coefficient of the first thermistor or the second thermistor, $L_1$ is a length of the first thermistor, $L_2$ is a length of the second thermistor, $S_1$ is a cross-sectional area of the first thermistor, and $S_2$ is a cross-sectional area of the second thermistor.

14. The temperature measurement method according to claim 13, further comprising:

setting a plurality of different ambient temperatures at which the temperature sensor is located; and respectively determining a plurality of differences between the first thermistor and the second thermistor in the plurality of different ambient temperatures by changing the polarity of the voltage between the two ports of the temperature sensor, and performing, based on a linear regression relationship between the plurality of differences and the plurality of different ambient temperatures, a check on a parameter of at least one of: $\rho_0$, $\alpha$, $L_1$, $L_2$, $S_1$ and $S_2$.

Fig. 1

Fig. 2

**Fig. 3**

| | |
|---|---|
| Forming the first thermistor, the second thermistor, the first diode and the second diode on a silicon wafer chip by a diffusion process | S302 |

↓

| | |
|---|---|
| Interconnecting the first thermistor, the second thermistor, the first diode and the second diode by metal on the silicon wafer chip to form the temperature sensor on the silicon wafer chip | S304 |

**Fig. 4**

| | |
|---|---|
| Burying the first thermistor, the second thermistor, the first diode, and the second diode into a buried layer of a substrate by embedding, or arranging the first thermistor, the second thermistor, the first diode, and the second diode on the substrate by surface mounting, wherein the first thermistor, the second thermistor, the first diode, and the second diode are discrete components | S402 |

**Fig. 5**

| | |
|---|---|
| Rxespectively arranging a plurality of temperature sensors in different system layers of a stacked packaging structure, wherein the temperature sensors are at a wafer level or a substrate level | S502 |

↓

| | |
|---|---|
| Uniformly leading ports of the temperature sensors out to a highest-layer packaging port through internal interconnection, so as to perform a parallel test among multiple layers | S504 |

**Fig. 6**

| | |
|---|---|
| Changing a polarity of a voltage between two ports of the temperature sensor, and measuring a resistance of the temperature sensor before the change of the polarity of the voltage and a resistance of the temperature sensor after the change of the polarity of the voltage | S602 |

↓

| | |
|---|---|
| Obtaining a difference $\Delta R$ between the first thermistor and the second thermistor in the temperature sensor according to the resistance of the temperature sensor before the change of the polarity of the voltage and the resistance of the temperature sensor after the change of the polarity of the voltage, and obtaining a temperature T detected by the temperature sensor based on formula (1) | S604 |

Fig. 7

**(a)** $R_P$ $R_S$

**(b)** $I$ $R_P$-dominated $R_S$-dominated $V$

**(c)**

I. Rp-dominated equivalent circuit

$R_P$ $R_S$

II. Rs-dominated equivalent circuit

$R_S$

Fig. 8

**(a)** $a$ $R_c$ $D_1$ $D_2$ $R_1$ $R_2$ $b$

**(b)** $a$ $R_c$ $R_{s1}$ $R_1$ $b$

**(c)** $a$ $R_c$ $R_{s2}$ $R_2$ $b$

Fig. 9

**(a)**
S901 Set port voltage Va-Vb>>Vt

S902 Measure resistance (Rc+R1)

S903 Set port voltage Vb-Va>>Vt

S904 Measure resistance (Rc +R2)

S905 Calculate △R

S906 Predict temperature

**(b)**
S1001 Change ambient temperature

S1002 Wait for thermal equilibrium

S1003 Resistance measurement flow

Set temperature

$\Delta R$

$\tan \theta = \rho_0 * A * \alpha$

$b = \rho_0 * A * \left( \frac{L_1}{S_1} - \frac{L_2}{S_2} \right)$

$T$

Fig. 10

**(a)** $a$ $b$

BGA Ball
IC substrate
Bump
Si Die

$D1$ $R1$
$D2$ $R2$

**(b)**

N+
Pwell
Ploy
M1
CT

Fig. 11

(a)

(b)

Fig. 12

(a)

(b)

## INTERNATIONAL SEARCH REPORT

| International application No. |
| --- |
| **PCT/CN2023/101903** |

**A. CLASSIFICATION OF SUBJECT MATTER**

G01K 7/22(2006.01)i

According to International Patent Classification (IPC) or to both national classification and IPC

**B. FIELDS SEARCHED**

Minimum documentation searched (classification system followed by classification symbols)

IPC: G01K

Documentation searched other than minimum documentation to the extent that such documents are included in the fields searched

Electronic data base consulted during the international search (name of data base and, where practicable, search terms used)

CNTXT, ENTXTC, WPABSC, VEN, ENTXT, CJFD, CNKI: 温度传感器, 温度, 温敏, 热敏, 电阻, 二极管, 并联, 串联, 第二, 第一, 电路, 二, 两, 反向, 寄生, 寄生电阻, 消, 消除, 阻值, NTD, RTD, temperature, sensor, thermistor, resistance, resistor, diode, Series, Parallel, two, second, Opposite, Parasitic

**C. DOCUMENTS CONSIDERED TO BE RELEVANT**

| Category* | Citation of document, with indication, where appropriate, of the relevant passages | Relevant to claim No. |
| --- | --- | --- |
| A | CN 114242787 A (JIANGSU CAS-JUNSHINE TECHNOLOGY CO., LTD.) 25 March 2022 (2022-03-25) <br> description, paragraphs 6-19, and figures 1-2 | 1-14 |
| A | CN 114334648 A (JIANGSU CAS-JUNSHINE TECHNOLOGY CO., LTD.) 12 April 2022 (2022-04-12) <br> entire document | 1-14 |
| A | CN 208284068 U (GUOTONG (BEIJING) TELECOM ENGINEERING CO., LTD.) 25 December 2018 (2018-12-25) <br> entire document | 1-14 |
| A | CN 112798149 A (HANGZHOU HOLLYSYS AUTOMATION CO., LTD. et al.) 14 May 2021 (2021-05-14) <br> entire document | 1-14 |
| A | CN 112964383 A (DEYANG CONGYUAN PHOTOELECTRIC TECHNOLOGY CO., LTD.) 15 June 2021 (2021-06-15) <br> entire document | 1-14 |

☑ Further documents are listed in the continuation of Box C.    ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **11 September 2023** | **13 September 2023** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/101903**

**C.      DOCUMENTS CONSIDERED TO BE RELEVANT**

| Category* | Citation of document, with indication, where appropriate, of the relevant passages | Relevant to claim No. |
|---|---|---|
| A | CN 108931315 A (NATIONAL OCEAN TECHNOLOGY CENTER) 04 December 2018 (2018-12-04)<br>      entire document | 1-14 |
| A | CN 103479523 A (WUHAN UNIVERSITY) 01 January 2014 (2014-01-01)<br>      entire document | 1-14 |
| A | CN 114647262 A (SEMES CO., LTD.) 21 June 2022 (2022-06-21)<br>      entire document | 1-14 |
| A | US 2003031229 A1 (MAXIM INTEGRATED PRODUCTS, INC.) 13 February 2003 (2003-02-13)<br>      entire document | 1-14 |

Form PCT/ISA/210 (second sheet) (July 2022)

| INTERNATIONAL SEARCH REPORT | | | International application No. | | | | |
|---|---|---|---|---|---|---|---|
| Information on patent family members | | | PCT/CN2023/101903 | | | | |

| Patent document cited in search report | | | Publication date (day/month/year) | Patent family member(s) | | | Publication date (day/month/year) |
|---|---|---|---|---|---|---|---|
| CN | 114242787 | A | 25 March 2022 | None | | | |
| CN | 114334648 | A | 12 April 2022 | None | | | |
| CN | 208284068 | U | 25 December 2018 | None | | | |
| CN | 112798149 | A | 14 May 2021 | None | | | |
| CN | 112964383 | A | 15 June 2021 | None | | | |
| CN | 108931315 | A | 04 December 2018 | None | | | |
| CN | 103479523 | A | 01 January 2014 | None | | | |
| CN | 114647262 | A | 21 June 2022 | KR | 20220089390 | A | 28 June 2022 |
| | | | | JP | 2022098457 | A | 01 July 2022 |
| | | | | US | 2022197318 | A1 | 23 June 2022 |
| US | 2003031229 | A1 | 13 February 2003 | US | 6554470 | B2 | 29 April 2003 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• CN 202210764620